# FASCICULE DE BREVET EUROPEEN

(11) **EP 3 049 233 B1**
(45) Date de publication et mention de la délivrance du brevet: **08.11.2017**
(21) Numéro de dépôt: 14784328.8
(22) Date de dépôt: 23.09.2014
(51) Int. Cl.: B29C 49/04, B29C 49/48, B29L 31/00, B29K 23/00

(54) **PROCÉDÉ DE FABRICATION D'UN RÉSERVOIR À CARBURANT EN MATIÈRE PLASTIQUE**
VERFAHREN ZUR HERSTELLUNG EINES KRAFTSTOFFTANKS AUS KUNSTSTOFF
METHOD FOR PRODUCING A FUEL TANK FROM PLASTIC MATERIAL

(30) Priorité: 26.09.2013 FR 1359309
(43) Date de publication de la demande: 03.08.2016
(73) Titulaire: Plastic Omnium Advanced Innovation and Research, 1120 Bruxelles (BE)
(72) Inventeur: BOUCAUX, Eric, F-60157 Elincourt Sainte Marguerite (FR)
(74) Mandataire: de la Bigne, Guillaume Michel Marie
(86) Numéro de dépôt international: PCT/FR2014/052358
(87) Numéro de publication internationale: WO 2015/044574

(56) Documents cités:
- US-A- 5 106 569
- US-A1- 2005 115 973
- US-A1- 2009 139 994

## Description

La présente invention concerne un procédé de fabrication d'un réservoir à carburant en matière plastique. L'invention s'applique notamment à la fabrication de réservoirs pour véhicules automobiles.

Des procédés de ce type sont décrits dans les documents US-A-5106569 et US2009/139994A1.

On connaît plusieurs techniques pour la fabrication d'un réservoir à carburant en matière plastique. Une technique de fabrication connue comprend, dans l'ordre, les étapes suivantes :
a) on insère une paraison en matière plastique dans un moule ouvert comprenant deux empreintes ;
b) on ferme le moule en accolant les empreintes ;
c) avant la fermeture complète du moule, on introduit un fluide (i.e. gaz) sous pression à l'intérieur de la paraison pour effectuer un pré-soufflage de la paraison ;
d) une fois que le moule est complètement fermé, on réalise le soufflage final de la paraison en la plaquant sur les empreintes du moule à l'aide du fluide sous pression ;
e) on ouvre le moule et on extrait le réservoir.

Généralement, un réservoir fabriqué selon cette technique connue est muni, sur son pourtour extérieur, d'une soudure en saillie (aussi appelée plan de joint du réservoir). Une telle soudure résulte du pincement (i.e. écrasement) de la paraison entre les empreintes du moule. La présence de cette soudure en saillie présente un certain nombre d'inconvénients.

Généralement, un réservoir à carburant est fixé sur le châssis d'un véhicule au moyen d'une (ou plusieurs) sangle métallique. La soudure en saillie gène le passage de la sangle, dans le sens où cette soudure en saillie empêche la sangle d'épouser le pourtour extérieur du réservoir. La fixation du réservoir au châssis du véhicule n'est donc pas optimale.

Un autre inconvénient réside dans le fait qu'il n'est généralement pas possible, ou tout du moins extrêmement difficile, de fixer un composant sur le pourtour extérieur du réservoir portant la soudure en saillie. Or, il serait souhaitable de pouvoir utiliser cette surface, par exemple, pour y attacher des câbles ou des tuyaux.

Par ailleurs, cette soudure en saillie nécessite un surplus de matière pour être formée. Ce surplus de matière augmente non seulement le coût de production du réservoir, mais également son poids.

La présente invention vise à résoudre ces problèmes.

A cet effet, dans un mode de réalisation particulier de l'invention, il est proposé un procédé pour la fabrication d'un réservoir à carburant en matière plastique comprenant, dans l'ordre, les étapes suivantes :
a) on insère une paraison en matière plastique dans un moule ouvert comprenant des empreintes ;
b) on rapproche les empreintes pour fermer (progressivement) le moule ;
c) avant la fermeture complète du moule, on introduit un fluide sous pression à l'intérieur de la paraison pour effectuer un pré-soufflage de la paraison ;
d) une fois que les empreintes sont accolées (suivant le plan de joint du moule), on réalise le soufflage final de la paraison pour plaquer la paraison sur les empreintes du moule à l'aide du fluide sous pression ;
e) on ouvre le moule et on extrait le réservoir.

Le procédé est tel qu'il comprend les étapes suivantes :
- avant le pré-soufflage de la paraison, on introduit au moins un élément d'obstacle entre les empreintes du moule ; et
- pendant le pré-soufflage de la paraison, on plaque une partie de la paraison sur l'élément d'obstacle à l'aide du fluide sous pression, de manière à empêcher que ladite partie de la paraison soit pincée entre les empreintes du moule et obtenir une zone de pourtour extérieur dépourvue de soudure.

Ainsi, le réservoir fabriqué selon le procédé de l'invention peut être muni, sur son pourtour extérieur, d'une (ou plusieurs) zone(s) (i.e. portions) dépourvue(s) de soudure en saillie. Ainsi, au pré-soufflage de la paraison c'est-à-dire lorsqu'on introduit un fluide sous pression à l'intérieur de la paraison, une partie de celle-ci vient se plaquer sur un élément d'obstacle. Ainsi, l'élément d'obstacle empêche une partie de la paraison d'entrer en contact avec les empreintes du moule. Plus précisément, l'élément d'obstacle selon l'invention permet de maintenir une partie de la paraison hors du plan de joint du moule (i.e. plan de jonction entre les empreintes du moule). Par exemple, l'élément d'obstacle selon l'invention peut être un longeron ou une plaque. Par exemple, dans le cas particulier où l'élément d'obstacle est un longeron, le réservoir fabriqué selon le procédé de l'invention peut être muni, sur son pourtour extérieur, d'un (ou plusieurs) renfoncement(s) (i.e. zone(s)) dépourvu de soudure en saillie.

De préférence, l'élément d'obstacle est introduit entre les empreintes du moule avant le pré-soufflage et de telle sorte que cet élément d'obstacle est en saillie à l'intérieur du moule. Préférentiellement, l'élément d'obstacle reste dans la même position pendant le pré-soufflage et le soufflage final de la paraison.

Dans un mode de réalisation particulier, l'élément d'obstacle est apte à passer d'une position repliée par rapport aux empreintes du moule à une position dépliée par rapport aux empreintes du moule, et vice versa.

Préférentiellement, lorsque le moule est ouvert l'élément d'obstacle est dans sa position repliée. Lorsque le moule se ferme l'élément d'obstacle est dans sa position dépliée et les empreintes du moule coulissent sur l'élément d'obstacle jusqu'à être accolées. Lorsque le moule est fermé, l'élément d'obstacle est à nouveau dans sa position repliée.

Une fois que les opérations de pré-soufflage et de soufflage final sont terminées, on ouvre le moule.

Dans un mode de réalisation particulier, l'élément d'obstacle est dans sa position repliée lorsque le moule s'ouvre.

Dans un autre mode de réalisation, l'élément d'obstacle est dans sa position dépliée lorsque le moule s'ouvre. L'élément d'obstacle reste dans sa position dépliée pour maintenir en équilibre le réservoir fabriqué. Une fois que le réservoir fabriqué est entièrement démoulé, l'élément d'obstacle revient dans sa position repliée. L'avantage d'un tel mode de réalisation est qu'il permet de s'affranchir de l'utilisation d'un système spécifique d'éjection de moule; l'élément d'obstacle remplaçant alors les éjecteurs classiquement utilisés pour le démoulage du réservoir.

Avantageusement, l'élément d'obstacle de l'invention a pour fonction de donner une forme souhaitée à une partie de paraison pendant le pré-soufflage et de maintenir cette partie de paraison hors du plan de joint du moule (i.e. plan de jonction entre les empreintes du moule) pendant le soufflage final. En maintenant cette partie de paraison hors du plan de joint du moule, on empêche qu'elle soit pincée entre les empreintes, et donc qu'elle forme une soudure. Ainsi, on obtient une zone de pourtour extérieur qui ne comprend aucune soudure.

Par exemple, dans le cas particulier où l'élément d'obstacle est un longeron, le réservoir fabriqué selon le procédé de l'invention peut être muni, sur son pourtour extérieur, d'un (ou plusieurs) renfoncement(s) dépourvu de soudure en saillie. Préférentiellement, le renfoncement s'étend vers l'intérieur du réservoir et s'ouvre vers l'extérieur du réservoir.

Par matière plastique, on désigne toute matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits supra.

Un polymère souvent employé est le polyéthylène. D'excellents résultats ont été obtenus avec du polyéthylène haute densité (PEHD).

De préférence, le réservoir auquel est destiné le procédé selon l'invention comprend une structure multicouche comprenant au moins une couche de matière thermoplastique et au moins une couche supplémentaire qui peut, de manière avantageuse, être constituée d'un matériau barrière aux liquides et/ou aux gaz.

De préférence, la nature et l'épaisseur de la couche barrière sont choisies de manière à limiter au maximum la perméabilité des liquides et des gaz en contact avec la paroi du réservoir. De préférence, cette couche est à base d'un matériau barrière, c'est-à-dire d'une résine imperméable au carburant telle que l'EVOH par exemple (copolymère éthylène - acétate de vinyle partiellement hydrolysé). Alternativement, le réservoir peut être soumis à un traitement de surface (fluoration ou sulfonation) ayant pour but de le rendre imperméable au carburant.

Par «paraison», on entend une préforme d'une seule pièce, généralement extrudée et généralement de forme substantiellement tubulaire, qui est destinée à constituer la paroi du réservoir après moulage, c'est-à-dire après une opération qui consiste à mettre la paraison, qui est à l'état fondu, aux formes et dimensions requises à l'aide du moule pour obtenir un réservoir.

Le procédé selon l'invention utilise de préférence une paraison extrudée. Cette paraison peut être issue d'une extrudeuse avec tête d'accumulation, auquel cas le procédé utilise généralement un moule fixe ouvert à chaque début de cycle pour recevoir une paraison. Alternativement, le procédé peut avoir recours à une extrusion continue soit avec un moule mobile qui vient se refermer périodiquement sur celle-ci, soit avec une manipulation de la paraison vers le moule.

Le procédé selon l'invention utilise un moule comprenant des empreintes, c'est-à-dire des sortes de demi-coquilles creuses dont les pourtours sont identiques et dont la surface interne est munie d'un relief correspondant à la forme externe du réservoir, le réservoir étant moulé par plaquage de la paraison sur cette surface au moyen d'un gaz sous pression injecté dans la paraison. Dans un mode de réalisation particulier, le gaz sous pression peut être injecté à l'aide, par exemple, d'une canne de soufflage. Dans un mode de réalisation particulier, la canne de soufflage peut être insérée par en dessous dans le moule. Dans un autre mode de réalisation, la canne de soufflage peut être insérée par le côté du moule.

Le procédé selon l'invention peut utiliser un outil permettant d'étirer (maintenir ouverte) la paraison. Cet outil peut consister en des pinces, mâchoires ou mors susceptible d'agripper les bords de la paraison et de les maintenir écartés.

Durant l'étape c), la paraison est pré-soufflée (i.e. gonflée) de préférence sans contacter les empreintes du moule. En général, à l'issue de l'étape c), le volume interne de la partie utile de la paraison est au moins égal à 60% du volume interne du réservoir, de préférence à au moins 80% voire même 90%.

L'étape de soufflage finale d) sert principalement à lui donner son relief/forme finale.

Pendant cette étape c) de pré-soufflage, le moule n'est pas fermé et les extrémités inférieure et supérieure de la paraison sont de préférence obturées de manière étanche mais sans être fermées (c'est-à-dire sans avoir leurs bords soudés mais au contraire maintenus écartés), par des dispositifs adéquats situés respectivement en dessous et au dessus du moule. Dans un exemple de réalisation, ces dispositifs dits d'étanchéification peuvent consister en un bloc interne et deux parties mobiles externes qui viennent pincer la paraison sur le bloc. Ce genre de dispositif donne de bons résultats en particulier pour le dispositif inférieur. En ce qui concerne le dispositif supérieur, celui-ci peut être constitué par la tête d'extrusion, c'est-à-dire que dans cette variante, qui est d'ailleurs avantageuse, la paraison n'est pas encore découpée au moment du pré-soufflage mais est toujours reliée à la tête d'extrusion. Cette variante permet de se passer de canne de pré-soufflage: il suffit en effet de munir la tête d'extrusion d'un dispositif de soufflage.

Dans le procédé selon l'invention, avant l'étape de démoulage e), on laisse de préférence se refroidir la paraison moulée - généralement en faisant circuler un gaz de refroidissement par l'intermédiaire d'une ou plusieurs aiguilles de soufflages. Les empreintes du moule sont alors de préférence également refroidies par circulation d'un fluide dans un réseau de canalisations.

Dans un mode de réalisation particulier de l'invention, les empreintes du moule comprennent chacune au moins une pièce mobile. De telles pièces mobiles sont configurées pour se rapprocher l'une de l'autre pendant la fermeture du moule et pour s'assembler avant le pré-soufflage de la paraison. Une fois assemblées, ces pièces mobiles forment l'élément d'obstacle. Par « assembler » on entend le fait de mettre en contact les pièces mobiles ou le fait d'accoupler (i.e. connecter) les pièces mobiles entre elles. Chaque pièce mobile est de préférence une sorte de poutre cylindrique dont le sens et la vitesse de déplacement sont contrôlables. Dans un mode de réalisation particulier les pièces mobiles et les empreintes du moule peuvent être déplacées à l'aide de moyens hydraulique ou pneumatique contrôlables.

De façon avantageuse, le procédé selon l'invention comprend une étape selon laquelle on monte un accessoire dans la zone de pourtour extérieur dépourvue de soudure. Préférentiellement, l'accessoire est monté en contact résilient avec la surface de la zone de pourtour extérieur dépourvue de soudure. Dans un mode de réalisation particulier, une sangle de fixation est montée en contact résilient avec la surface la zone de pourtour extérieur dépourvue de soudure. Ainsi, la sangle de fixation peut avoir une forme complémentaire à celle du renfoncement. Dans un autre mode de réalisation particulier, une pipette de ventilation (ou tout autre type de composant d'un système à carburant) peut être soudée dans la zone de pourtour extérieur dépourvue de soudure. Dans un autre mode de réalisation particulier, un ou plusieurs câbles électriques peuvent être attachés (par soudure ou clipsage) dans la zone de pourtour extérieur dépourvue de soudure.

Dans un mode de réalisation particulier de l'invention, l'élément d'obstacle comprend des reliefs sur sa surface extérieure. De cette façon, il est possible de former une zone de pourtour extérieur dépourvue de soudure et munie de reliefs. Dans un mode de réalisation particulier, l'élément d'obstacle peut être muni de reliefs en forme d'ailette. Ainsi, la zone de pourtour extérieur dépourvue de soudure peut être munie d'ailettes configurées, par exemple, pour accélérer l'échange thermique entre la zone de pourtour extérieur dépourvue de soudure et l'environnement extérieur. Dans un autre mode de réalisation particulier, l'élément d'obstacle peut être muni de reliefs en écaille de poisson. Ainsi, la zone de pourtour extérieur dépourvue de soudure peut être munie de reliefs en écaille de poisson. Par exemple, ces écailles peuvent être orientées à l'inverse de celles qui peuvent se trouver sur une sangle de fixation. Cela permet une meilleure accroche de la sangle au réservoir. Dans un autre mode de réalisation particulier, l'élément d'obstacle peut être muni de reliefs formant un marquage. Ainsi, l'élément d'obstacle de l'invention peut être utilisé pour obtenir facilement un marquage en relief sur le réservoir. Dans un autre mode de réalisation particulier, la zone de pourtour extérieur dépourvue de soudure peut être munie de reliefs agissant comme raidisseur ou renfort local.

Dans un mode de réalisation particulier de l'invention, l'élément d'obstacle comprend des moyens de régulation thermique. Par exemple, l'élément d'obstacle peut intégrer un dispositif de chauffe adapté pour maintenir la température de la partie de paraison qui est plaquée sur l'élément d'obstacle à une valeur de température donnée.

Dans un mode de réalisation particulier de l'invention, l'élément d'obstacle comprend des orifices d'aspiration et/ou de soufflage. De tels orifices d'aspiration et/ou de soufflage peuvent être utilisés pour obtenir localement une meilleure répartition de matière pendant les opérations de soufflage de la paraison dans le moule, Cette meilleure répartition de matière se traduit par une réduction du poids du réservoir fabriqué.

Dans un mode de réalisation avantageux, l'élément d'obstacle (ou les pièces mobiles qui le constitue) est en aluminium. Dans un autre mode de réalisation, l'élément d'obstacle peut être en acier ou en bronze.

La présente invention concerne également un réservoir à carburant en matière plastique fabriqué au moyen du procédé décrit ci-dessus. Le réservoir ainsi fabriqué peut être muni, sur son pourtour extérieur, d'une (ou plusieurs) zone(s) (i.e portions) dépourvue(s) de soudure en saillie.

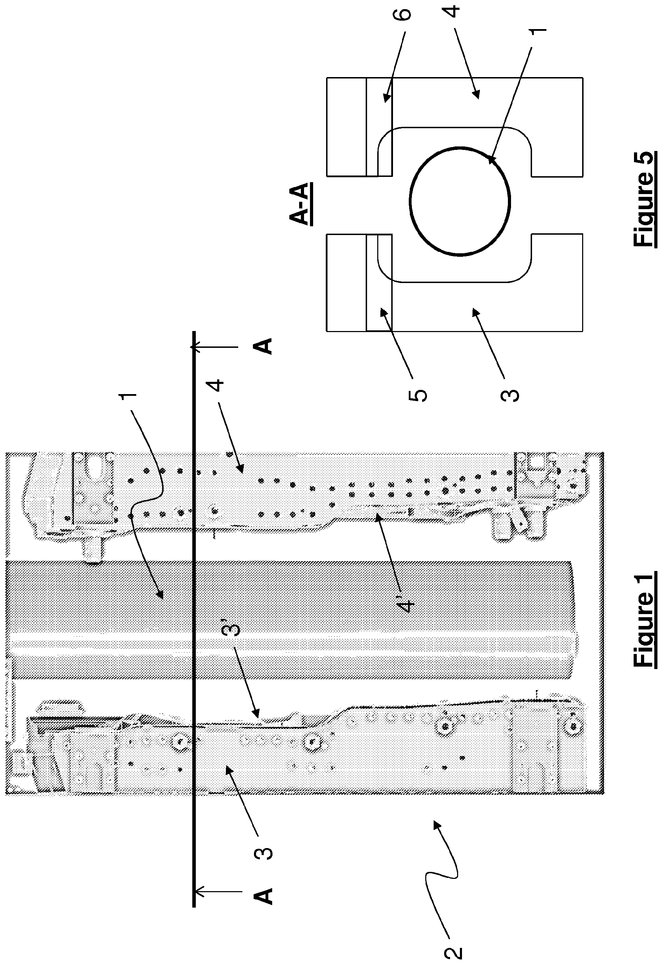

Les Figures 1 à 8 ont pour but d'illustrer, à titre d'exemple indicatif et non limitatif, le principe d'un procédé de fabrication selon un mode de réalisation particulier de l'invention.

Dans les exemples des Figures 1 à 8 décrits ci-dessous, l'élément d'obstacle selon l'invention est un longeron de forme cylindrique. Bien entendu, dans d'autres modes de réalisation (non illustrés), l'élément d'obstacle selon l'invention peut être une plaque ou une poutre carrée.

Comme illustré dans l'exemple de la Figure 1, une paraison (1) en matière plastique est introduite entre deux empreintes d'un moule (2) en position d'ouverture. La paraison (1) est introduite dans le moule (2), tout en étant maintenue ouverte/écartée. Le moule (2) comprend des empreintes (3, 4). Les empreintes du moule (3, 4) présentent une surface interne (3', 4') correspondant à la surface externe du réservoir à mouler. La figure 5 est une vue en coupe selon A-A de la figure 1. Dans cet exemple de réalisation, les empreintes du moule (3, 4) comprennent chacune une pièce mobile (5, 6) comme illustré à la figure 5. Comme on le verra par la suite, une fois assemblées cette paire de pièces mobiles (5, 6) forment un longeron (i.e. élément d'obstacle). Dans un autre mode de réalisation (non illustré), les empreintes du moule (3, 4) peuvent être munies de plusieurs paires de pièces mobiles disposées à différentes hauteurs du moule. Dans un autre mode de réalisation (non illustré), un longeron (qui dans ce cas est un bloc unique) peut être monté dans le moule de telle sorte que les empreintes du moule (3, 4) peuvent coulisser sur le longeron pendant la fermeture et l'ouverture du moule. Dans un autre mode de réalisation (non illustré), le longeron peut être introduit et maintenu dans le moule par un robot extérieur.

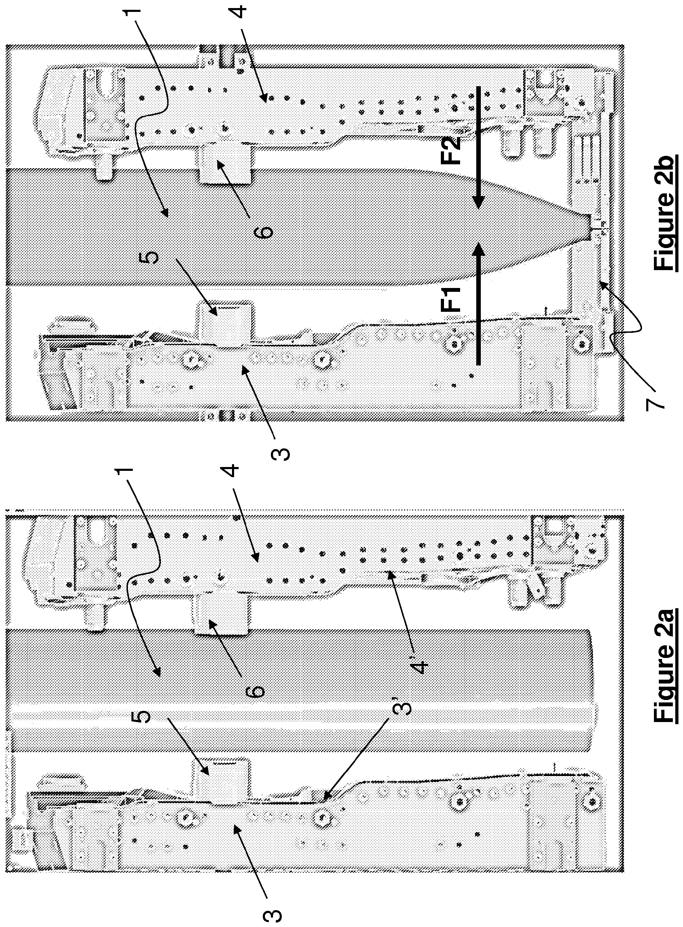

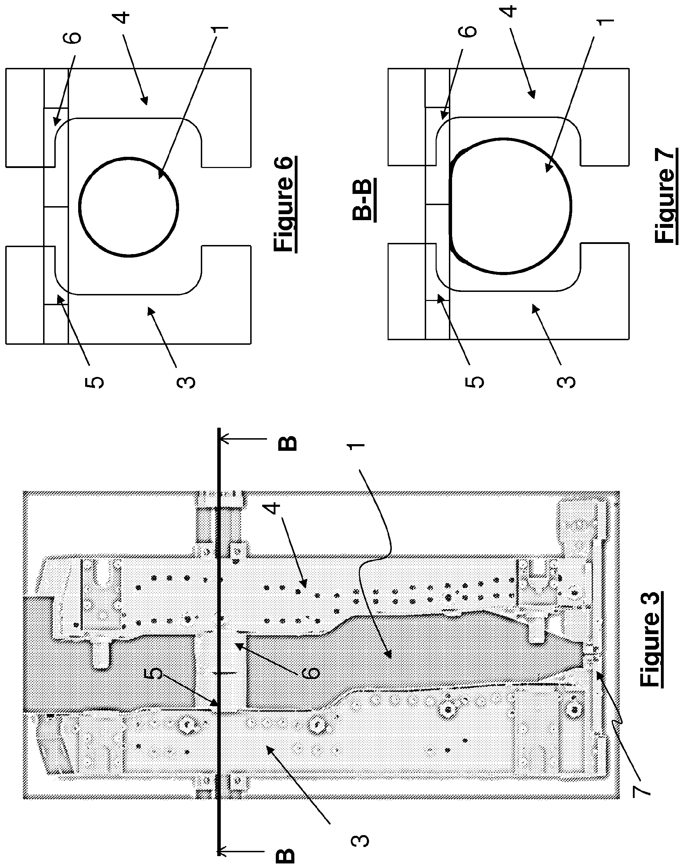

A la figure 2a, on peut voir le moule (2) dans une première position de fermeture intermédiaire qui est telle que les pièces mobiles (5, 6) sont introduites entre les empreintes du moule (3, 4). Les pièces mobiles (5, 6) sont dans une position dépliée par rapport aux empreintes du moule et sont en saillie à l'intérieur du moule. A la figure 2b, on peut voir le moule (2) dans une deuxième position de fermeture intermédiaire qui est telle que le bas de la paraison est fermé à l'aide d'une plaque (7), aussi appelée pince de pré-soufflage. Les pièces mobiles (5, 6) se déplacent l'une vers l'autre suivant le sens de fermeture des empreintes du moule (3, 4), représenté par les flèches (F1, F2). Les pièces mobiles (5, 6) se rapprochent l'une vers l'autre jusqu'à faire contact. Ce contact se produit avant le pré-soufflage de la paraison, comme illustré à la figure 6.

La Figure 3 illustre l'étape de pré-soufflage de la paraison. A cette étape, on introduit un fluide sous pression à l'intérieur de la paraison (1) pour la gonfler et ce, sans entrer en contact avec les surfaces internes (3', 4') des empreintes du moule (3, 4). Ainsi, une partie de la paraison se plaque sur le longeron formé par la paire de pièces mobiles (5, 6). La figure 7 est une vue en coupe selon B-B de la figure 3.

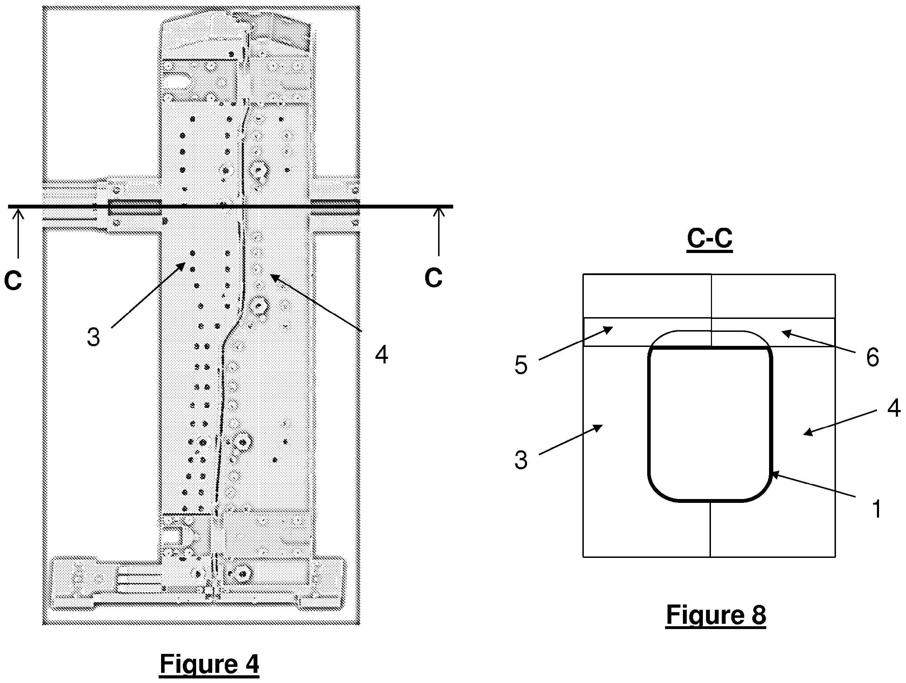

La Figure 4 illustre l'étape de soufflage final de la paraison. Pendant cette étape le moule est complètement fermé. On peut voir que les empreintes du moule sont accolées par leur pourtour. Pendant cette étape de soufflage final, le longeron occupe la même position que pendant l'étape de pré-soufflage. Ainsi, pendant l'étape de soufflage final, on maintient ladite partie de paraison hors du plan de joint du moule (i.e. plan de jonction entre les empreintes du moule), comme illustré à la figure 8 (coupe selon C-C de la figure 4). En maintenant cette partie de paraison hors du plan de joint du moule, on empêche qu'elle soit pincée entre les empreintes, et donc qu'elle forme une soudure. Lorsque l'ensemble est refroidi, le réservoir peut être démoulé. Le réservoir ainsi fabriqué comprend avantageusement un renfoncement dépourvu de soudure en saillie.

## Revendications

1. Procédé pour la fabrication d'un réservoir à carburant en matière plastique comprenant, dans l'ordre, les étapes suivantes :
a) on insère une paraison (1) en matière plastique dans un moule ouvert comprenant des empreintes (3,4);
b) on rapproche les empreintes pour fermer le moule ;
c) avant la fermeture complète du moule, on introduit un fluide sous pression à l'intérieur de la paraison pour effectuer un pré-soufflage de la paraison;
d) une fois que les empreintes sont accolées, on réalise le soufflage final de la paraison pour plaquer la paraison sur les empreintes du moule à l'aide du fluide sous pression;
e) on ouvre le moule et on extrait le réservoir ;
le procédé étant **caractérisé en ce qu'**il comprend les étapes suivantes :
- avant le pré-soufflage de la paraison, on introduit au moins un élément d'obstacle (5, 6) entre les empreintes du moule ; et
- pendant le pré-soufflage de la paraison, on plaque une partie de la paraison sur l'élément d'obstacle à l'aide du fluide sous pression, de manière à empêcher que ladite partie de la paraison soit pincée entre les empreintes du moule et obtenir une zone de pourtour extérieur dépourvue de soudure.

2. Procédé selon la revendication 1, **caractérisé en ce que** les empreintes du moule comprennent chacune au moins une pièce mobile, et **en ce que** lesdites pièces mobiles sont configurées pour se rapprocher l'une de l'autre pendant la fermeture du moule et pour s'assembler avant le pré-soufflage de la paraison.

3. Procédé selon la revendication 1, **caractérisé en ce que** au moins l'une des empreintes du moule comprend au moins un élément d'obstacle mobile.

4. Procédé selon l'une quelconque des revendications 1 à 3, **caractérisé en ce qu'**il comprend une étape selon laquelle on monte un accessoire dans la zone de pourtour extérieur dépourvue de soudure.

5. Procédé selon l'une quelconque des revendications 1 à 4, **caractérisé en ce que** l'élément d'obstacle est un longeron.

6. Procédé selon l'une quelconque des revendications 1 à 5, **caractérisé en ce que** l'élément d'obstacle comprend des reliefs sur sa surface extérieure.

7. Procédé selon l'une quelconque des revendications 1 à 6, **caractérisé en ce que** l'élément d'obstacle comprend des moyens de régulation thermique.

8. Procédé selon l'une quelconque des revendications 1 à 7, **caractérisé en ce que** l'élément d'obstacle comprend des orifices d'aspiration et/ou de soufflage.

9. Procédé selon l'une quelconque des revendications 1 à 8, **caractérisé en ce que** l'élément d'obstacle est en métal.

## Patentansprüche

1. Verfahren zum Herstellen eines Kraftstofftanks aus Kunststoff, das in der Reihenfolge die folgenden Schritte umfasst:
a) Einbringen eines Vorformlings (1) aus Kunststoff in ein geöffnetes Formwerkzeug, das Formhöhlungen (3, 4) umfasst;
b) Zusammenführen der Formhöhlungen, um das Formwerkzeug zu schließen;
c) vor dem vollständigen Schließen des Formwerkzeugs, Einführen eines Druckfluids in das Innere des Vorformlings, um ein Vorblasformen des Vorformlings durchzuführen;
d) sobald die Formhöhlungen aneinander gefügt sind, Realisieren des endgültigen Blasformens des Vorformlings, um den Vorformling mit Hilfe des Druckfluids auf die Formhöhlungen des Formwerkzeugs zu pressen;
e) Öffnen des Formwerkzeugs und Herausnehmen des Tanks; wobei das Verfahren **dadurch gekennzeichnet ist, dass** es die folgenden Schritte umfasst:
- vor dem Vorblasformen des Vorformlings, Einführen mindestens eines Hinderniselements (5, 6) zwischen den Formhöhlungen des Formwerkzeugs; und
- während des Vorblasformens des Vorformlings, mit Hilfe des Druckfluids Pressen eines Teils des Vorformlings auf das Hinderniselement, so dass der Teil des Vorformlings zwischen den Formhöhlungen des Formwerkzeugs eingeklemmt wird und eine nahtlose Außenumfangszone erhalten wird.

2. Verfahren nach Anspruch 1, **dadurch gekennzeichnet, dass** die Formhöhlungen des Formwerkzeugs jede mindestens ein bewegliches Teil umfassen und dass die beweglichen Teile ausgebildet sind, um während des Schließens des Formwerkzeugs zusammengeführt zu werden und um vor dem Vorblasformen des Vorformlings gefügt zu werden.

3. Verfahren nach Anspruch 1, **dadurch gekennzeichnet, dass** mindestens eine der Formhöhlungen des Formwerkzeugs mindestens ein bewegliches Hinderniselement umfasst.

4. Verfahren nach einem der Ansprüche 1 bis 3, **dadurch gekennzeichnet, dass** es einen Schritt umfasst, bei dem ein Zubehörteil in der nahtlosen Außenumfangszone montiert wird.

5. Verfahren nach einem der Ansprüche 1 bis 4, **dadurch gekennzeichnet, dass** das Hinderniselement ein Längsträger ist.

6. Verfahren nach einem der Ansprüche 1 bis 5, **dadurch gekennzeichnet, dass** das Hinderniselement auf seiner Außenfläche Erhöhungen umfasst.

7. Verfahren nach einem der Ansprüche 1 bis 6, **dadurch gekennzeichnet, dass** das Hinderniselement Wärmeregulierungsmittel umfasst.

8. Verfahren nach einem der Ansprüche 1 bis 7, **dadurch gekennzeichnet, dass** das Hinderniselement Saug- und/oder Blasöffnungen umfasst.

9. Verfahren nach einem der Ansprüche 1 bis 8, **dadurch gekennzeichnet, dass** das Hinderniselement aus Metall ist.

## Claims

1. A method for producing a fuel tank from plastic material, comprising the following steps, in this order:
a) inserting a plastic parison (1) into an open mold comprising mold cavities (3, 4);
b) moving the mold cavities closer to close the mold;
c) before complete closure of the mold, introducing a pressurized fluid into the interior of the parison in order to perform pre-blowing of the parison;
d) once the mold cavities are in contact, carrying out the final blowing of the parison to press the parison onto the mold cavities of the mold with the aid of the pressurized fluid;
e) opening the mold and extracting the tank;
the method being **characterized in that** it comprises the following steps:
- before the pre-blowing of the parison, introducing at least one obstacle element (5, 6) between the mold cavities; and
- during the pre-blowing of the parison, pressing a portion of the parison onto the obstacle element with the aid of the pressurized fluid, so as to prevent said portion of the parison from being clamped between the mold cavities of the mold and to obtain a weld-free exterior perimeter area.

2. The method as claimed in claim 1, **characterized in that** the mold cavities of the mold each comprises at least one mobile part and **in that** said mobile parts are configured to move closer to one another during the closure of the mold and to be assembled before the pre-blowing of the parison.

3. The method as claimed in claim 1, **characterized in that** at least one of the mold cavities of the mold comprises at least one mobile obstacle element.

4. The method as claimed in any one of claims 1 to 3, **characterized in that** it comprises a step in which an accessory is mounted in the weld-free exterior perimeter area.

5. The method as claimed in any one of claims 1 to 4, **characterized in that** the obstacle element is a longitudinal member.

6. The method as claimed in any of one of claims 1 to 5, **characterized in that** the obstacle element comprises reliefs on its exterior surface.

7. The method as claimed in any one of claims 1 to 6, **characterized in that** the obstacle element comprises thermal regulation means.

8. The method as claimed in any one of claims 1 to 7, **characterized in that** the obstacle element comprises suction and/or blowing orifices.

9. The method as claimed in any one of claims 1 to 8, **characterized in that** the obstacle element is made of metal.
